# EUROPEAN PATENT SPECIFICATION

(11) **EP 1 814 777 B1**
(45) Date of publication and mention of the grant of the patent: **08.08.2012**
(21) Application number: 05850970.4
(22) Date of filing: 02.12.2005
(51) Int. Cl.: B62L 1/14, B62L 1/12

(54) **BICYCLE BRAKE**
FAHRRADBREMSE
FREIN DE BICYCLETTE

(43) Date of publication of application: 08.08.2007
(73) Proprietor: Campagnolo S.r.l., 36100 Vicenza (VI) (IT)
(72) Inventor: CAIAZZO, Marco, I-36040 Torri di Quartesolo (IT)
(74) Representative: Riccardi, Elisa
(86) International application number: PCT/IT2005/000710
(87) International publication number: WO 2007/063564

(56) References cited:
- EP-A- 0 965 518
- DE-A1- 4 328 758
- FR-A- 2 231 559

## Description

The present invention relates to a bicycle brake to be mounted on the frame of a bicycle at the rear wheel or on the fork at the front wheel, comprising two levers bearing respective brake pads that, in response to the actuation of a control lever, typically arranged at the ends of the handlebar, and through a sheathed cable (Bowden cable), swing so as to clamp the brake pads about the rim of one of the bicycle wheels to stop it.

Brakes are known, for example from US 2004/0074704 A1, wherein a lever is directly actuated by the sheathed cable, while the other lever is actuated by a cam pivoted on the lever directly actuated by the sheathed cable.

The present invention however relates to a bicycle brake of the type comprising a first swinging lever having an actuation arm connected to an inner cable of a sheathed brake cable and a second swinging lever having an actuation arm connected to a sheath of the brake cable.

Two types of brakes of the above kind are known: in the single pivot type, both levers are pivoted around a single central pivot that also serves as attachment to the bicycle frame or fork; in the dual pivot type, one of the two levers, usually the second one, is pivoted around a central pivot that also serves as attachment to the bicycle, while the other lever, usually the first lever,"is pivoted around a second pivot on a support body fixed to the central pivot.

In both cases, in the second lever the area for attaching to the cable sheath and thus the actuation arm are on the same side, with respect to the wheel and thus with respect to the central pivot, as the area for supporting the pad and thus as the braking arm, while in the first lever the actuation arm is on the opposite side of the braking arm with respect to the wheel.

As a consequence, the second lever is essentially V-shaped, wherein the actuation and braking arms form an angle between them that faces away from the wheel, as shown in US 6,412,605 B2, a reinforcing beam being possibly provided extending between the two arms, as shown in EP 0 965 518 A1, on which the preamble of claim 1 is based.

The first lever, conversely, has a slightly curved shape, wherein the actuation and braking arms form an obtuse angle between them that faces the wheel, and a similar reinforcing beam is missing, that would take up the space between the pads that is intended for receiving the wheel.

The object at the basis of the present invention is to improve the stress distribution in a bicycle brake.

The invention relates to a bicycle brake, comprising (i) a first lever having an actuation arm for connecting to an inner cable of a brake cable and a braking arm for supporting a brake pad, and (ii) a second lever having an actuation arm for connecting to a sheath of the brake cable and a braking arm for supporting a brake pad, characterized in that the actuation arm of the first lever comprises two side by side branches, a distal one and a proximal one with respect to the brake cable.

The Applicant has indeed recognized that in the known brakes, the actuation arm of the first lever, comprised of a single branch, is subjected to a notable bending stress when its end connected to the inner cable of the control cable is pulled thereby and the pad is forced against the rim. By replacing the single branch with two side by side branches, during braking the distal one with respect to the traction cable is instead essentially subjected to tensile stress only, and the proximal one with respect to the traction cable is essentially subjected to compressive stress only. Because the materials of which the brake levers are typically made have a compression strength and a tensile strength well higher than the flexural strength, a stronger brake is obtained, that can also be lighter in weight because a smaller overall cross-section of the actuation arm of the first lever suffices.

Preferably the two branches merge at an area for connecting to the inner cable of the brake cable.

In such a manner an area of the actuation arm having a comparably large cross-section is defined, that turns out to be useful for attaching the end of the inner cable of the brake cable.

Analogously, the two branches may merge at a pivoting area of the first lever.

Furthermore, analogously a portion of the braking arm of the first lever, adjacent to the pivoting area of the first lever, may comprise two side by side branches, a distal one and a proximal one with respect to the brake cable, that also during braking are essentially subjected to tensile stress and compressive stress only, respectively, instead of to the bending stress in the plane perpendicular to the pivot of the first lever itself, that there would be if the branch were single.

Preferably, an area of the braking arm of the first lever, adjacent to an area for supporting the pad, comprises a single branch.

By making such area with a single branch, it is possible to give it a sufficiently large cross-section area, still keeping a small overall space taken up by the first lever, in order to bear also the bending stresses caused by the pad being drawn by the rotating wheel during braking, stresses that lie in a plane parallel to the pivot of the first lever.

Advantageously the second lever comprises a reinforcing beam extending between the actuation arm and the braking arm.

According to an aspect also advantageous per se, the reinforcing beam merges with the actuation arm between an area for connecting to the sheath of the brake cable and an intermediate point of the actuation arm.

In such a manner the reinforcing beam is more efficient in bearing the bending stresses in the plane parallel to the pivot of the second lever, caused by the pad being drawn by the rotating wheel during braking.

In one embodiment, the intermediate point is closer to a pivoting area of the second lever than to the area for connecting to the sheath of the brake cable.

In such a manner the reinforcing beam is even more efficient.

Preferably, in said embodiment the reinforcing beam has a curved pattern from the braking arm to the actuation arm in the plane perpendicular to the central pivot.

In one embodiment, the first lever and the second lever are pivoted around a single central pivot provided for attaching to the bicycle frame or fork, in other words the brake is of the single pivot type.

In another embodiment, one of the levers, usually the second lever, is pivoted around a central pivot provided for attaching to the bicycle, while the other lever, usually the first lever, is pivoted around a second pivot on a support body fixed to the central pivot, in other words the brake is of the dual pivot type.

In order to keep the brake weight low still preserving suitable features of mechanical strength, according to an aspect of the invention that is also advantageous per se, the support body has an aperture between a hole for receiving the central pivot and a hole for receiving the second pivot.

Further features and advantages of the invention will become clearer from the description of some preferred embodiments, made with reference to the attached drawings, wherein:
- fig. 1 shows a perspective view of a single pivot brake according to the invention,
- fig. 2 shows a front view of a first lever of the brake of fig. 1;
- fig. 3 shows a front view of a second lever of the brake of fig. 1;
- fig. 4 shows a front view of an alternative embodiment of the second lever of fig. 3;
- fig. 5 shows a perspective view of a dual pivot brake according to the invention;
- fig. 6 shows a front view of a first lever of the brake of fig. 5;
- fig. 7 shows a front view of a second lever of the brake of fig. 5; and
- fig. 8 shows a front view of a support body of the brake of fig. 5.

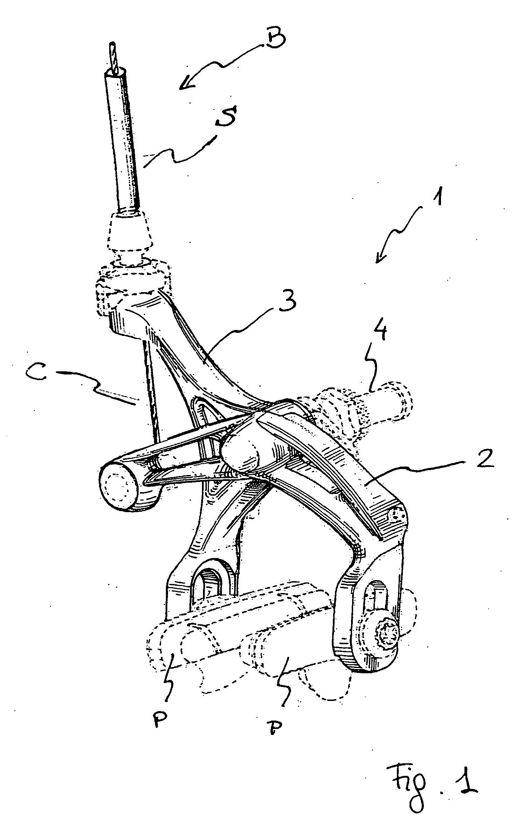

With reference to figure 1, a bicycle brake 1 of the single pivot type according to an embodiment of the invention comprises a first lever 2 and a second lever 3, both pivoted around a common central pivot 4.

The central pivot 4 is used, besides for pivoting the levers 2, 3, also for attachment to the bicycle frame at the rear wheel or at the front fork.

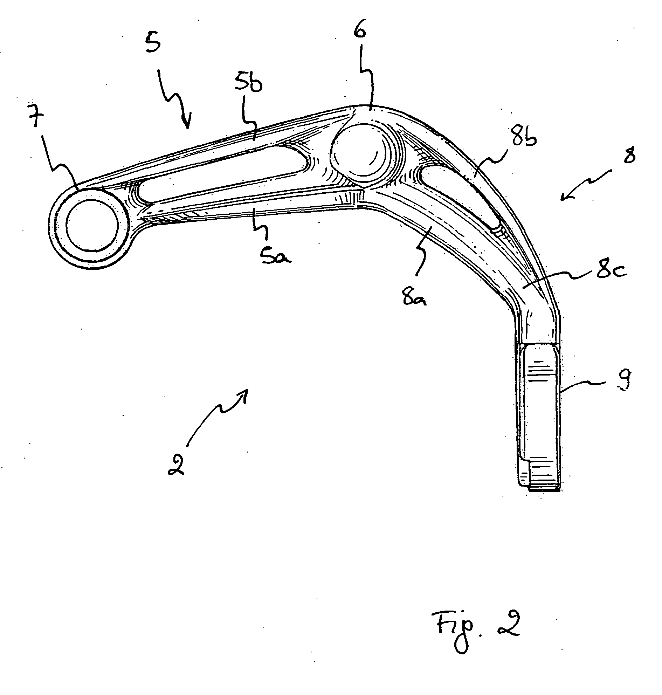

The first lever 2, better shown in figure 2, has an actuation arm 5 extending from its pivoting area 6 for coupling to pivot 4 to its area 7 for connecting -in a per se known manner- to an inner cable C of a brake cable B, and a braking arm 8 extending from the pivoting area 6 to an area 9 for supporting a brake pad P.

In a conventional manner, the brake cable B is an essentially inextensible Bowden cable, wherein the inner cable C is sheathed in a sheath S.

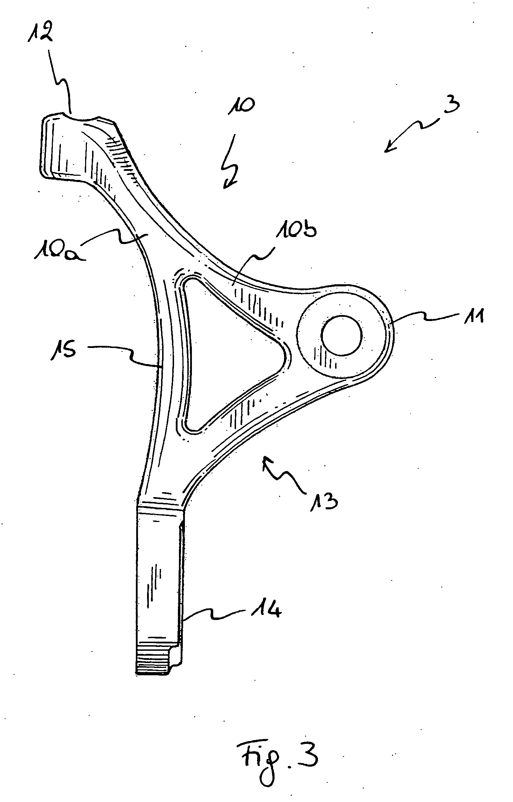

The second lever 3, better shown in figure 3, analogously has an actuation arm 10 extending from its pivoting area 11 for attachment to pivot 4 to its area 12 for connecting -in a per se known manner- to the sheath S of the brake cable B, and a braking arm 13 extending from the pivoting area 11 to an area 14 for supporting another brake pad P.

A reinforcing beam 15 extends between the two actuation 10 and braking 13 arms of the second lever 3.

The pull of the brake cable B, in response to the actuation of a control lever, not visible and usually arranged at the ends of the handlebar, causes the two actuation arms 5, 10 to approach each other, thus making the levers 2, 3 swing about the central pivot 4 so as to clamp the brake pads P about the rim of one of the bicycle wheels to stop it.

To this end, the braking arms 8, 13 of the two levers 2, 3 are curved or bent so that the areas 9, 14 for supporting the pads P extend essentially facing each other.

When the control lever actuation stops, return means, such as for example a wire spring having one or more turns, make the two levers 2, 3 return toward the rest position, wherein the pads P are spaced from each other and therefore are not in contact with the wheel rim.

Because the brake cable B is extended on one side (to the left in figure 1) with respect to the central pivot 4, in the first lever 2 the actuation arm 5 is on the opposite side of the braking arm 8 with respect to the central pivot 4, and its arms 5, 8 form an obtuse angle between them that faces towards the wheel.

In the second lever 3, on the other hand, the actuation arm 10 is on the same side, with respect to the wheel and thus with respect to the central pivot 4, as the braking arm 13. The actuation 10 and braking 13 arms of the second lever 3 thus form an angle between them that faces away from the wheel.

As better shown in figure 2, the actuation arm 5 of the first lever 2 comprises two side by side branches, a distal branch 5a and a proximal branch 5b, wherein terms distal and proximal are used with respect to the position of the brake cable B, that is arranged above the attachment areas 7, 12 in the brake orientation shown in the figures. The two branches 5a, 5b merge at area 7 for connecting to the inner cable C of the brake cable B, and at the pivoting area 6 of the first lever 2.

During actuation of brake 1, when the attaching arena 7 of the first lever 2 is pulled by the inner cable C of the brake cable B towards lever 3 (upwards with reference to the figures) and pad P is forced against the rim, the distal branch 5a (lowermost in the figures) is subjected to tensile stress, while the proximal branch 5b (uppermost in the figures) is subjected to compressive stress. The bending stresses in the two branches 5a, 5b are instead quite negligible, what is advantageous in that the flexural strength is typically well lower than the tensile strength and than the compression strength. It is worthwhile noting that if instead of the two distal and proximal branches 5a, 5b, a single branch actuation arm 5 were provided, it would be subjected to notable bending stresses in the plane orthogonal to the central pivot 4.

Moreover, the cross-section area of the single branches 5a, 5b need only be sized to bear said tensile and compressive stresses, respectively. It follows that the cross-section area of the actuation arm 5 as a whole is smaller than what would be necessary if instead of the two distal and proximal branches 5a, 5b, a single branch actuation arm 5 were provided. Accordingly, the brake 1 as a whole is lighter with respect to its configuration according to the prior art.

Through the merging of the two branches at the connection area 7 and at the pivoting area 6, said areas have a comparably large cross-section, suitable for implementing there the means for connecting to the end of the inner cable C of the brake cable B and, respectively, to the central pivot 4.

In a portion adjacent to the pivoting area 6, the braking arm 8 of the first lever 2 also comprises a distal branch 8a and a proximal branch 8b arranged side by side, wherein again the terms distal and proximal are used with reference to the brake cable B in the mounted configuration of the brake 1.

During actuation of brake 1, the braking arm 8 of the first lever is subjected to the reaction force (towards the right in the figures) applied by the wheel rim on pad P and thus on the supporting area 9. Through the described configuration with two branches 8a, 8b it is obtained that the distal branch 8a (lowermost in the figures) is subjected to tensile stress, while the proximal branch 8b. (uppermost in the figures) is subjected to compressive stress. The bending stresses in the two branches 8a, 8b are conversely quite negligible, with analogous advantages to those described in relation to the provision of the two branches 5a, 5b in the actuation arm 5.

Conversely, in the remaining portion the braking arm 8 comprises a single branch 8c, suitable to also bear the bending stresses in the plane parallel to the pivot 4 (perpendicular to the drawing sheet), caused by pad P being drawn by the rotating wheel.

As mentioned above, the second lever 3 comprises a reinforcing beam 15 extending between the actuation arm 10 and the braking arm 13.

As better shown in figure 3, the reinforcing beam 15 merges with the actuation arm 10 between the area 12 for connecting to the sheath S of the brake cable B and an intermediate, approximately central point of the actuation arm 10.

By providing for the reinforcing beam 15 not to extend to the area 12 for connecting to the sheath S of the brake cable B, rather to an intermediate point of the actuation arm 10, it is obtained that it is closer to the pivoting area 11 of the second lever 2. As a consequence, the reinforcing beam 15 is more efficient in bearing the bending stresses in the plane parallel to pivot 4 (perpendicular to the drawing sheet), caused by the pad P being drawn by the rotating wheel.

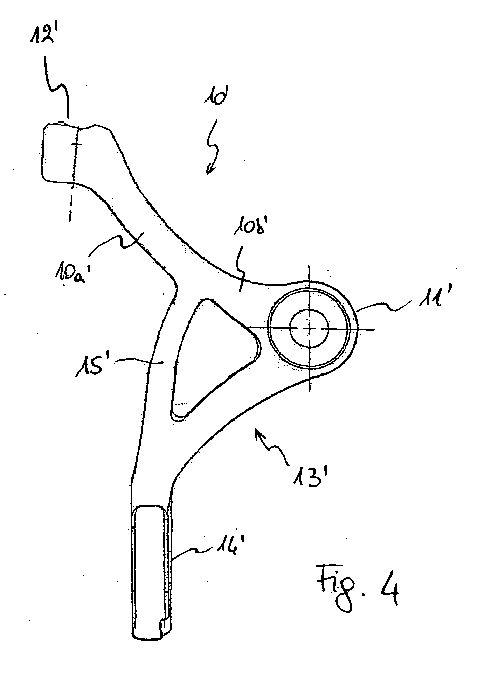

In the alternative embodiment of the second lever shown in figure 4, wherein analogous references are used, labelled with a prime, the reinforcing beam 15' has a curved pattern from the braking arm 14' to the actuation arm 10' in the plane perpendicular to the central pivot (plane of the drawing sheet) and merges with the actuation arm 10' in an intermediate point that is closer to the pivoting area 11' of the second lever 3' than to the area 12' for connecting to the sheath S of the brake cable B.

The reinforcing beam 15' is even more efficient in bearing the bending stresses in the plane parallel to the pivot 4 (perpendicular to the drawing sheet), caused by the pad P being drawn by the rotating wheel.

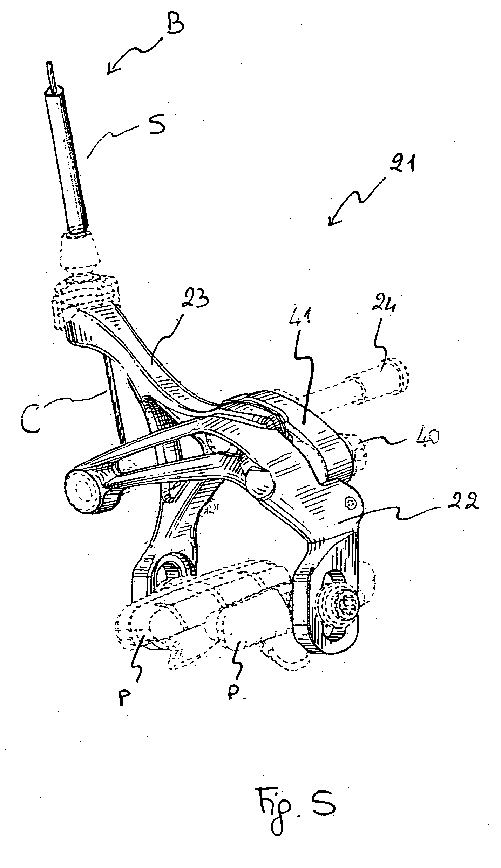

In figure 5 a bicycle brake 21 of the dual pivot type is shown, according to another embodiment of the invention, wherein its parts analogous to brake 1 described above are indicated with analogous references, increased by 20.

Brake 21 differs from brake 1 in that the second lever 23 is pivoted around the central pivot 24, that also serves for attaching the brake 21 to the bicycle, while the first lever 22 is pivoted around a second pivot 40 on a support body 41 fixed to the central pivot.

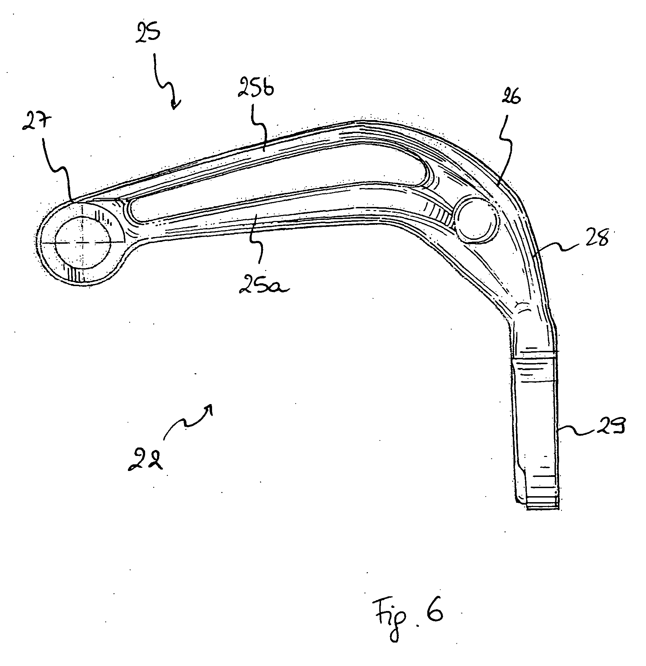

The first lever 22, better shown in figure 6, differs from the first lever 2 of figure 2, besides from the different position of the pivoting area 26, in that the whole braking arm 28 is single branched. In a dual pivot brake such as brake 21, the actuation arm 25 and the braking arm 28 have lengths that approximately stand in a 1,5:1 ratio, as opposed to a brake of the single type such as brake 1, wherein said ratio is about 1:1. The braking force being equal, the braking arm 28 of brake 21 is therefore subjected to a greater stress per unit length with respect to arm 8 of brake 1. It is accordingly proper that the whole braking arm 28 comprises a single branch, suitable to also bear the bending stresses in the plane parallel to pivot 26 (perpendicular to the drawing sheet), caused by the pad P being drawn by the rotating wheel.

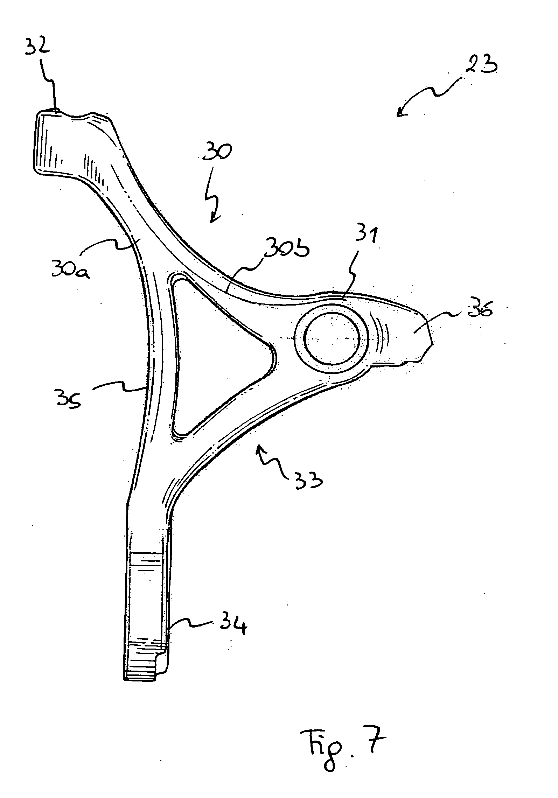

The second lever 23 of the dual pivot brake 21, better shown in figure 7, differs from the second lever 3 of the single pivot brake 1 in that it has a lug 36 extending from the pivoting area 31 on the opposite side with respect to the actuation 30 and braking 33 arms, that cooperates with suitable means on the first lever 22 to balance the different forces caused by the different lengths of actuation arm 25 and braking arm 28 of the first lever 22.

Of course it is possible also in this case to shape the reinforcing beam 35 as shown in figure 4.

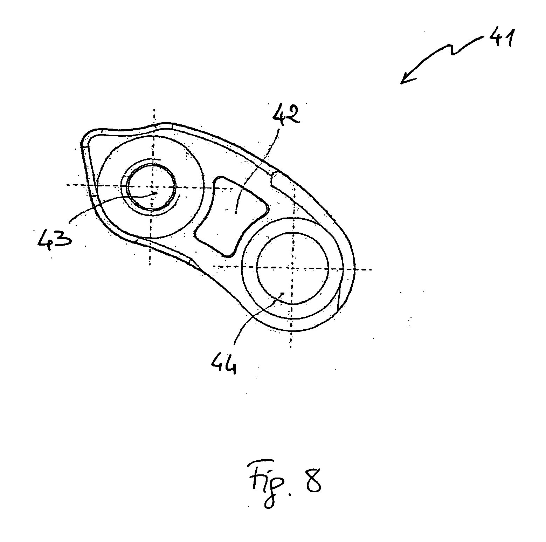

As shown in figure 8, the support body 41 has an aperture 42 between a hole 43 for receiving the central pivot 24 and a hole 44 for receiving the second pivot 40. Such an aperture 42 allows the weight of brake 21 to be kept low, still preserving suitable features of mechanical strength.

Of course in both the above described brakes 1, 21 the mutual position of the two levers 2, 3 or 3', 22, 23 along the axis of the central pivot 4, 24 could be reversed.

Those skilled in the art will understand that the configuration of a portion of the braking arm 8 of the first lever 2 according to the two side by side branches 8a, 8b can also be advantageous irrespectively of the configuration of the actuation arm 5, 25 of the first lever 2, 22 according to the two side by side branches 5a, 5b, 25a, 25b.

Also the various configurations of the second lever 3, 3', 23 shown and described can be advantageous irrespectively of the configuration of the actuation arm 5, 25 of the first lever 2, 22 according to the two side by side branches 5a, 5b, 25a, 25b.

## Claims

1. Bicycle brake (1, 21), comprising (i) a first lever (2, 22) having an actuation arm (5, 25) for connecting to an inner cable (C) of a brake cable (B) and a braking arm (8, 28) for supporting a brake pad (P) and (ii) a second lever (3, 3', 23) having an actuation arm (10, 30) for connecting to a sheath (S) of the brake cable (B) and a braking arm (13, 33) for supporting a brake pad (P), **characterized in that** the actuation arm (5, 25) of the first lever (2, 22) comprises two side by side branches (5a, 5b, 25a, 25b), a distal one and a proximal one with respect to the brake cable (B).

2. Brake (1, 21) according to claim 1, **characterized in that** the actuation arm (5, 25) of the first lever (2, 22) extends between a pivoting area (6, 26) of the first lever (2, 22) and an area (7, 27) for connecting the first lever (2, 22) to the inner cable (C) of the brake cable (B)

3. Brake (1, 21) according to any of the previous claims, **characterized in that** each of the two branches (5a, 5b, 25a, 25b) extends between a pivoting area (6, 26) of the first lever (2, 22) and an area (7, 27) for connecting the first lever (2, 22) to the inner cable (C) of the brake cable (B).

4. Brake (1, 21) according to any of the previous claims, **characterized in that** the two branches (5a, 5b, 25a, 25b) merge at an area (7, 27) for connecting to the inner cable (C) of the brake cable (B).

5. Brake (1, 21) according to any of the previous claims, **characterized in that** the two branches (5a, 5b, 25a, 25b) merge at a pivoting area (6, 26) of the first lever (2, 22).

6. Brake (1) according to any of the previous claims, **characterized in that** a portion of the braking arm (8) of the first lever (2), adjacent to the pivoting area (6) of the first lever (2), comprises two side by side branches (8a, 8b), a distal one and a proximal one with respect to the brake cable (B).

7. Brake (1) according to any of the previous claims, **characterized in that** an area of the braking arm (8) of the first lever (2), adjacent to an area (9) for supporting the pad (P), comprises a single branch (8c).

8. Brake (1, 21) according to any of the previous claims, **characterized in that** the second lever (3, 3', 23) comprises a reinforcing beam (15, 15', 35) extending between the actuation arm (10, 10', 30) and the braking arm (13, 13', 33).

9. Brake (1, 21) according to claim 8, **characterized in that** the reinforcing beam (15, 15', 35) merges with the actuation arm (10, 10', 30) between an area (12, 12', 32) for connecting to the sheath (S) of the brake cable (B) and an intermediate point of the actuation arm (10, 10', 30).

10. Brake (1, 21) according to claim 9, **characterized in that** the intermediate point is closer to a pivoting area (11, 11', 31) of the second lever (3, 3', 23) than to the area (12, 12', 32) for connecting to the sheath (S) of the brake cable (B).

11. Brake (1, 21) according to claim 10, **characterized in that** the reinforcing beam (15') has a curved pattern from the braking arm (13') to the actuation arm (10') in the plane perpendicular to the central pivot (4, 24).

12. Brake (1) according to any of the previous claims, **characterized in that** the first lever (2) and the second lever (3, 3') are pivoted around a single central pivot (4) provided for attaching to the bicycle frame or fork.

13. Brake (21) according to any of the previous claims, **characterized in that** one of the levers (23) is pivoted around a central pivot (24) provided for attachment to the bicycle, while the other of the levers (22) is pivoted around a second pivot (40) on a support body (41) fixed to the central pivot (24).

14. Brake (21) according to claim 13, **characterized in that** the support body (41) has an aperture (42) between a hole (43) for receiving the central pivot (24) and a hole (44) for receiving the second pivot (40).

## Patentansprüche

1. Fahrradbremse (1, 21), enthaltend (i) einen ersten Hebel (2, 22), der einen Betätigungsarm (5, 25) für die Verbindung zu einem inneren Seil (C) eines Bremsseiles (B) und einen Bremsarm (8, 28) zum Halten eines Bremsbelages (P) hat, und (ii) einen zweiten Hebel (3, 3', 23), der einen Betätigungsarm (10, 30) für die Verbindung zu einer Ummantelung (S) des Bremsseils (B) und einen Bremsarm (13, 33) zum Halten eines Bremsbelages (P) hat, **dadurch gekennzeichnet, dass** der Betätigungsarm (5, 25) des ersten Hebels (2, 22) zwei nebeneinander liegende Verzweigungen (5a, 5b, 25a, 25b), eine distale und eine proximale im Bezug auf das Bremsseil (B), hat.

2. Bremse (1, 21) nach Anspruch 1, **dadurch gekennzeichnet, dass** sich der Betätigungsarm (5, 25) des ersten Hebels (2, 22) zwischen einem Schwenkbereich (6, 26) des ersten Hebels (2, 22) und einem Bereich (7, 27) für die Verbindung des ersten Hebels (2, 22) zu dem inneren Seil (C) des Bremsseils (B) erstreckt.

3. Bremse (1, 21) nach einem der vorhergehenden Ansprüche, **dadurch gekennzeichnet, dass** sich jede der beiden Verzweigungen (5a, 5b, 25a, 25b) zwischen einem Schwenkbereich (6, 26) des ersten Hebels (2, 22) und einem Bereich (7, 27) für die Verbindung des ersten Hebels (2, 22) mit dem inneren Seil (C) des Bremsseils (B) erstreckt.

4. Bremse (1, 21) nach einem der vorhergehenden Ansprüche, **dadurch gekennzeichnet**, das die beiden Verzweigungen (5a, 5b, 25a, 25b) in einem Bereich (7, 27) für die Verbindung mit dem inneren Seil (C) des Bremsseils (B) zusammenlaufen.

5. Bremse (1, 21) nach einem der vorhergehenden Ansprüche, **dadurch gekennzeichnet, dass** die beiden Verzweigungen (5a, 5b, 25a, 25b) in einem Schwenkbereich (6, 26) des ersten Hebels (2, 22) zusammenlaufen

6. Bremse (1) nach einem der vorhergehenden Ansprüche, **dadurch gekennzeichnet, dass** ein Abschnitt des Bremsarms (8) des ersten Hebels (2), der an den Schwenkbereich (6) des ersten Hebels (2) grenzt, zwei nebeneinander liegende Verzweigungen (8a, 8b), eine distale und eine proximale im Bezug auf das Bremsseil (B), enthält.

7. Bremse (1) nach einem der vorhergehenden Ansprüche, **dadurch gekennzeichnet, dass** ein Bereich des Bremsarms (8) des ersten Hebels (2), benachbart einem Bereich (9) zum Halten des Belages (P), eine einzelne Verzweigung (8c) enthält.

8. Bremse (1, 21) nach einem der vorhergehenden Ansprüche, **dadurch gekennzeichnet, dass** der zweite Hebel (3, 3', 23) einen Verstärkungsträger (15, 15', 35) enthält, der sich zwischen dem Betätigungsarm (10, 10', 30) und dem Bremsarm (13, 13'. 33) erstreckt.

9. Bremse (1, 21) nach Anspruch 8, **dadurch gekennzeichnet, dass** der Verstärkungsträger (15, 15', 35) mit dem Betätigungsarm (10, 10', 30) zwischen einem Bereich (12, 12', 32) für die Verbindung mit der Ummantelung (S) des Bremsseils (B) und einem Mittelpunkt des Betätigungsarms (10, 10', 30) zusammenläuft.

10. Bremse (1, 21) nach Anspruch 9, **dadurch gekennzeichnet, dass** der Mittelpunkt dichter an einem Schwenkbereich (11, 11', 31) des zweiten Hebels (3, 3', 23) als an dem Bereich (12, 12', 32) für die Verbindung mit der Ummantelung (S) des Bremsseils (B) liegt.

11. Bremse (1, 21) nach Anspruch 10, **dadurch gekennzeichnet, dass** der Verstärkungsträger (15') eine gekrümmte Beschaffenheit von dem Bremsarm (13') zu dem Betätigungsarm (10') in einer Ebene senkrecht zu dem zentralen Zapfen (4, 24) hat.

12. Bremse (1) nach einem der vorhergehenden Ansprüche, **dadurch gekennzeichnet, dass** der erste Hebel (2) und der zweite Hebel (3, 3') um einen einzelnen zentralen Zapfen (4) schwenken, der für die Anbringung an dem Fahrradrahmen oder der Gabel vorgesehen ist.

13. Bremse (21) nach einem der vorhergehenden Ansprüche, **dadurch gekennzeichnet, dass** einer der Hebel (23) um einen zentralen Zapfen (24) schwenkt, der für die Anbringung an dem Fahrrad vorgesehen ist, während der andere der Hebel (22) um einen zweiten Zapfen (40) an einem Haltekörper (41) schwenkt, der an dem zentralen Zapfen (24) angebracht ist.

14. Bremse (21) nach Anspruch 13, **dadurch gekennzeichnet, dass** der Haltekörper (41) eine Öffnung (42) zwischen einem Loch (43) zum Aufnehmen des zentralen Zapfens (24) und ein Loch (44) zum Aufnehmen des zweiten Zapfens (40) hat

## Revendications

1. Frein de bicyclette (1, 21), comprenant (i) un premier levier (2, 22), comportant un bras d'actionnement (5, 25) qui le relie à un câble intérieur (C) d'un câble de frein (B) et un bras de freinage (8, 28) qui porte un patin de frein (P), et (ii) un second levier (3, 3', 23), comportant un bras d'actionnement (10, 30) qui le relie à une gaine (S) du câble de frein (B) et un bras de freinage (13, 33) qui porte un patin de frein (P), **caractérisé en ce que** le bras d'actionnement (5, 25) du premier levier (2, 22) comprend deux branches côte à côte (5a, 5b, 25a, 25b), l'une distale et l'autre proximale par rapport au câble de frein (B).

2. Frein (1, 21) selon la revendication 1, **caractérisé en ce que** le bras d'actionnement (5, 25) du premier levier (2, 22) s'étend entre une zone de pivotement (6, 26) du premier levier (2, 22) et une zone (7, 27) de liaison du premier levier (2, 22) au câble intérieur (C) du câble de frein (B).

3. Frein (1, 21) selon l'une quelconque des revendications précédentes, **caractérisé en ce que** chacune des deux branches (5a, 5b, 25a, 25b) s'étend entre une zone de pivotement (6, 26) du premier levier (2, 22) et une zone (7, 27) de liaison du premier levier (2, 22) au câble intérieur (C) du câble de frein (B).

4. Frein (1, 21) selon l'une quelconque des revendications précédentes, **caractérisé en ce que** les deux branches (5a, 5b, 25a, 25b) se réunissent au niveau d'une zone (7, 27) de liaison au câble intérieur (C) du câble de frein (B).

5. Frein (1, 21) selon l'une quelconque des revendications précédentes, **caractérisé en ce que** les deux branches (5a, 5b, 25a, 25b) se réunissent au niveau d'une zone de pivotement (6, 26) du premier levier (2, 22).

6. Frein (1) selon l'une quelconque des revendications précédentes, **caractérisé en ce qu'**une partie du bras de freinage (8) du premier levier (2), voisine de la zone de pivotement (6) du premier levier (2), comprend deux branches côte à côte (8a, 8b), l'une distale et l'autre proximale par rapport au câble de frein (B).

7. Frein (1) selon l'une quelconque des revendications précédentes, **caractérisé en ce qu'**une zone du bras de freinage (8) du premier levier (2), voisine d'une zone (9) portant le patin (P), comprend une unique branche (8c).

8. Frein (1, 21) selon l'une quelconque des revendications précédentes, **caractérisé en ce que** le second levier (3, 3', 23) comprend un montant de renforcement (15, 15', 35) s'étendant entre le bras d'actionnement (10, 10', 30) et le bras de freinage (13, 13', 33).

9. Frein (1, 21) selon la revendication 8, **caractérisé en ce que** le montant de renforcement (15, 15', 35) se réunit au bras d'actionnement (10, 10', 30) entre une zone (12, 12', 32) de liaison à la gaine (S) du câble de frein (B) et un point intermédiaire du bras d'actionnement (10, 10', 30).

10. Frein (1, 21) selon la revendication 9, **caractérisé en ce que** le point intermédiaire est plus proche d'une zone de pivotement (11, 11', 31) du second levier (3, 3', 23) que de la zone (12, 12', 32) de liaison à la gaine (S) du câble de frein (B).

11. Frein (1, 21) selon la revendication 10, **caractérisé en ce que** le montant de renforcement (15') possède une allure incurvée depuis le bras de freinage (13') jusqu'au bras d'actionnement (10') dans le plan perpendiculaire au pivot central (4, 24).

12. Frein (1) selon l'une quelconque des revendications précédentes, **caractérisé en ce que** le premier levier (2) et le second levier (3, 3') pivotent autour d'un unique pivot central (4) prévu pour la fixation sur le cadre de la bicyclette ou sur la fourche.

13. Frein (21) selon l'une quelconque des revendications précédentes, **caractérisé en ce qu'**un des leviers (23) pivote autour d'un pivot central (24) prévu pour la fixation sur la bicyclette, tandis que l'autre levier (22) pivote autour d'un second pivot (40) sur un corps de support (41) fixé sur le pivot central (24).

14. Frein (21) selon la revendication 13, **caractérisé en ce que** le corps de support (41) possède une ouverture (42) entre un orifice (43) pour recevoir le pivot central (24) et un orifice (44) pour recevoir le second pivot (40).
